# EUROPEAN PATENT SPECIFICATION

(11) **EP 2 178 024 B1**
(45) Date of publication and mention of the grant of the patent: **25.04.2012**
(21) Application number: 09252273.9
(22) Date of filing: 25.09.2009
(51) Int. Cl.: G06K 7/00, G06K 7/10

(54) **Apparatus for communicating with RFID tag and method for communicating with RFID tag**
Vorrichtung zur Kommunikation mit einem RFID-Etikett und Verfahren zur Kommunikation mit einem RFID-Etikett
Appareil de communication avec une étiquette RFID, procédé de communication avec une étiquette RFID

(30) Priority: 30.09.2008 JP 2008252074
(43) Date of publication of application: 21.04.2010
(73) Proprietor: Brother Kogyo Kabushiki Kaisha, Nagoya-shi, Aichi 467-8561 (JP)
(72) Inventor: Tsujimoto, Yoshiyuki, Aichi 467-8562 (JP)
(74) Representative: Smith, Samuel Leonard

(56) References cited:
- EP-A1- 1 845 631
- DE-U1-202006 017 474
- US-A1- 2004 266 481
- US-A1- 2007 194 929

## Description

### TECHNICAL FIELD

The present invention relates to an apparatus for communicating with a radio frequency identification (RFID) tag and a method of communicating with an RFID tag configured to execute information transmission and reception via radio communication with an RFID tag communicable with the outside.

### BACKGROUND ART

As a system for article management, a radio frequency identification (RFID) system is already known. This system includes an RFID tag disposed at an article to be managed and an apparatus for communicating with an RFID tag configured to read information held in the RFID tag contactlessly.

In this system, the RFID tag is constituted in a label state, for example, and the RFID tag includes an RFID tag circuit element. The RFID tag circuit element includes an IC circuit part storing predetermined RFID tag information and a tag antenna connected to the IC circuit part for information transmission and reception. Even if the RFID tag is stained or disposed in a hidden position, the apparatus for communicating with an RFID tag is capable of accessing information in the IC circuit part, that is, information reading or information writing using an apparatus antenna. The RFID system has already been put into practical use in various fields.

As described above, in the RFID system, the apparatus for communicating with an RFID tag and an RFID tag circuit element conduct radio communication with each other. In general, communication sensitivity of this radio communication is the most favorable if a polarization phase direction of the apparatus antenna in the apparatus for communicating with an RFID tag matches that of the tag antenna of the RFID tag circuit element. The communication sensitivity of the radio communication is the worse, if the polarization phase direction of the apparatus antenna and that of the tag antenna are deviated from each other the farther.

In a prior art reference described in JP, A, 2006-148472, consideration is given to matching in directions of polarization phases between the tag antenna of the RFID tag circuit element and the apparatus antenna of the apparatus for communicating with an RFID tag. This prior-art antenna device has a plurality of apparatus antennas with polarization phases different from each other. Detecting means such as an acceleration sensor detects inclination of the antenna device itself or moving direction thereof. The plurality of apparatus antennas is selectively switched for use on the basis of a detection result of the detecting means.
EP 1 845 631 A1 discloses an RFID system which increases the probability of detection of an unused channel and which can reduce the effect of interference between reader/writers. The reader/writer main unit judges the level of a received interference signal, determines a polarization direction for which the level of the interference signal is equal to or less than a threshold, transmits a command signal to the tag with a polarization direction different from the polarization direction thus determined, and receives a response signal from the tag to the command signal with the polarization direction thus determined.
US 2007/0194929 discloses an RFID antenna system that includes an interrogator having a radio frequency transceiver, a first linearly polarized antenna in electrical communication with the transceiver, and a second linearly polarized antenna in electrical communication with the transceiver, the second antenna having a polarization in a direction substantially perpendicular to the first antenna.
DE 20 2006 017 474 U1 discloses an RFID system and method which is capable of communicating with tags in more than one polarization direction.

### DISCLOSURE OF THE INVENTION

### Problem to be solved by the Invention

There can be a case in which an apparatus for communicating with an RFID tag conducts communications with a plurality of RFID tag circuit elements, for example. In this case, the plurality of RFID tag circuit elements might include the RFID tag circuit elements with polarization phase directions of tag antennas different from each other. In this case, in order to realize favorable communication with all the RFID tag circuit elements, the polarization phase direction of the apparatus antenna needs to be switched so as to match the polarization phase direction of each of the RFID tag circuit elements. For the RFID tag circuit element whose polarization phase direction of the tag antenna is vertical, for example, the polarization phase direction of the apparatus antenna needs to be switched to the vertical direction. For the RFID tag circuit element whose polarization phase direction of the tag antenna is horizontal, the polarization phase direction of the apparatus antenna needs to be switched to the horizontal direction. Also, there can be a case in which the plurality of RFID tag circuit elements has biased distribution in the polarization phase directions of the tag antennas, for example. That is, a relatively large number of tag antennas with a certain polarization phase direction might be present, while a relatively small number of tag antennas with another polarization phase direction might also be present. In such a case, if the polarization phase direction of the apparatus antenna is switched simply with a uniform time interval, when the polarization phase direction of the apparatus antenna is switched to another polarization phase direction, wasteful time during which information transmission and reception is not carried out is generated. If the polarization phase direction of the apparatus antenna is switched simply with a uniform time interval, when the polarization phase direction of the apparatus antenna is switched to the above certain polarization phase direction, time for information transmission and reception runs short. As a result, it is difficult to realize efficient communication with all the RFID tag circuit elements.

In the antenna device of the above Japanese prior-art reference, the polarization phase direction of the apparatus antenna is switched according to a state of the apparatus such as an attitude or moving directions. However, with this prior-art reference, such a case that there is a plurality of polarization phase directions of the tag antennas is not assumed. Particularly, there is no consideration to a case in which there is biased distribution in the polarization phase directions of each tag antenna of the plurality of RFID tag circuit elements. As a result, it is difficult for the above prior-art reference antenna device to conduct efficient communication.

An object of the present invention is to provide an apparatus and a method for communicating with an RFID tag that can realize lean and efficient communication even if biased distribution is present in the polarization phase directions of each tag antenna of the plurality of RFID tag circuit elements.
According to an aspect of the invention, there is provided an apparatus for communicating with a radio frequency identification (RFID) tag, configured to execute information reading from a plurality of RFID tag circuit elements, each of said RFID tag circuit elements including an IC circuit part configured to store information and a tag antenna for information transmission and reception, and having different polarization directions of said tag antenna, the apparatus comprising:
antenna means configured to carry out information transmission and reception with said plurality of RFID tag circuit elements via radio communication;
transmission control means configured to generate a reading command for acquiring information from said RFID tag circuit element with a communication area included in a peripheral area of said apparatus, and to transmit the reading command to said RFID tag circuit element by said antenna means;
reception control means capable of receiving a response signal from said RFID tags in one of a plurality of identification slots selectively, said response signal being transmitted from said RFID tag circuit element according to said reading command generated and transmitted by said transmission control means;
slot number control means configured to variably set the number of said identification slots on the basis of a reception state of the response signals received by said reception control means;
distribution-related information obtainment means configured to obtain, in said peripheral area, the number of RFID tag circuit elements, or said number of said identification slots corresponding to said number of said RFID tag circuit elements, associated with a polarization direction of said plurality of RFID tag circuit elements as distribution-related information;
polarization switching means capable of switching a polarization-direction of said antenna means during radio communication to a plurality of directions; and
switching setting means configured to set a switching time interval for said plurality of polarization directions by the polarization switching means on the basis of said distribution-related information obtained by said distribution-related information obtainment means.
According to another aspect of the invention, there is provided a method for communicating with a radio frequency identification (RFID) tag by receiving a response signal from a plurality of RFID tag circuit elements and executing information reading, said response signal being transmitted according to a reading command transmitted from a communication antenna, each of said RFID tag circuit elements including an IC circuit part storing information and a tag antenna for information transmission and reception, and having a different polarization direction of said tag antenna from each other, comprising the steps of:
a first step to generate a reading command for acquiring information from said RFID tag circuit element with a communication area included in a peripheral area, and to transmit the reading command to said RFID tag circuit element;
a second step to receive a response signal from said RFID tags in one of a plurality of identification slots selectively, said response signal being transmitted from said RFID tag circuit element according to said reading command generated and transmitted in said first step; and
a third step to variably set the number of said identification slots on the basis of a reception state of the response signals received in said second step;
a fourth step to obtain, in said peripheral area, the number of RFID tag circuit elements, or said number of said identification slots corresponding to said number of said RFID tag circuit elements, associated with a polarization direction of said plurality of RFID tag circuit elements as distribution-related information; and
a fifth step to variably set a switching time interval for switching a polarization of said communication antenna to a plurality of polarization directions on the basis of said distribution-related information obtained.

### BRIEF DESCRIPTION OF THE DRAWING

Fig. 1 is a diagram illustrating an example of a case in which a reader of an embodiment of the present invention is applied to management of a large number of articles to which an RFID tag is attached.
Fig. 2 is a system configuration diagram illustrating an outline of the reader.
Fig. 3 is a block diagram illustrating an example of a functional configuration of an RFID tag circuit element provided on an RFID tag.
Fig. 4 is a diagram illustrating an example of a time chart of a signal transmitted and received between a reader and a single RFID tag.
Fig. 5 illustrates a slot number table stored in a reader.
Fig. 6 illustrates an optimal communication time table stored in a reader.
Fig. 7 is a flowchart illustrating a control procedure executed by a CPU of a reader.
Fig. 8 is a flowchart illustrating a detailed procedure of polarization-phase based reading processing at Step S 100.
Fig. 9 is a flowchart illustrating a control procedure executed by a control part of an RFID tag circuit element.

### BEST MODE FOR CARRYING OUT THE INVENTION

An embodiment of the present invention will be described below referring to the attached drawings.

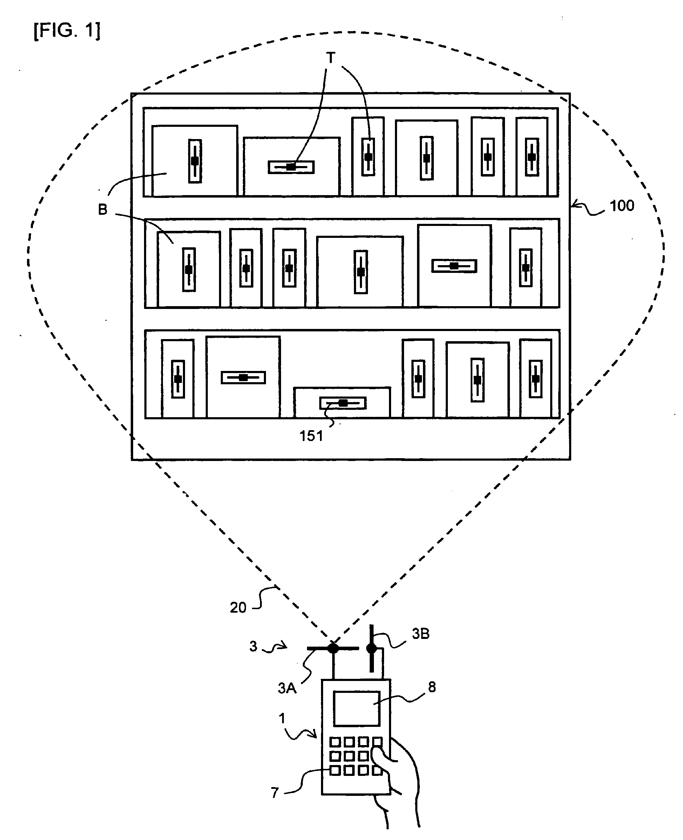

An example of an apparatus for communicating with an RFID tag of this embodiment is described by using Fig. 1. In this example, the apparatus for communicating with an RFID tag is used for management of a large number of articles to which RFID tags are attached, respectively. As shown in Fig. 1, a large number of articles B stored in a single cabinet 100 have RFID tags T attached, respectively. Each RFID tag T has a dipole tag antenna 151 in this example. A longitudinal direction of the tag antenna 151 of the RFID tag T attached to each article B is a longitudinal direction, that is, a vertical direction, or a lateral direction, that is, a horizontal direction.

A reader 1, which is the apparatus for communicating with an RFID tag of this embodiment, is a handheld type and has a substantially rectangular solid-shaped housing. On this housing, a reader antenna 3 as antenna means is disposed. On one of end portions in the longitudinal direction of the housing, two antenna elements 3A and3B are disposed. On one of plane portions of the housing, an operation portion 7 and a display portion 8 are disposed.

In this embodiment, a manager of the articles B is an operator of the reader 1, that is, a user of the reader 1. The reader 1 conducts radio communication with the RFID tag T attached to each article B so as to read information relating to the corresponding article B. On the basis of the information reading result, the user manages a storage state of each article B. A communicable area of the reader 1, that is, a communication area 20 is a range shown by a broken line in the figure. The communication area 20 is an area expanding around the reader antenna 3. The communication area 20 includes most or all of the single cabinet 100 in this example.

As described above, the tag antenna 151 of each RFID tag T has a linear shape. In order for the reader 1 to conduct favorable radio communication with these tag antennas 151 and to reliably read information, the polarization phase direction of the reader antenna 3 and that of the tag antenna 151 need to match each other. If the reader 3 is the same dipole antenna as the tag antenna 151, for example, the longitudinal direction of the reader antenna 3 and that of the tag antenna 151 need to match each other. As described above, the longitudinal direction of the tag antenna 151 of each RFID tag T attached to each article B is either one of the vertical direction or the horizontal direction. Therefore, in order for the reader 1 to conduct radio communication with all the RFID tags T present in the cabinet 100, the polarization phase direction of the reader antenna 3 needs to be switched at least to the vertical direction or the horizontal direction.

The reader 1 has an antenna element 3A perpendicular to the plane portion of the housing and an antenna element 3B horizontal to the plane portion of the housing. The user takes up the reader 1 and holds it in a substantially horizontal reference attitude with the plane portion of the housing directed vertically upward. The reader 1 appropriately switches the two antenna elements 3A and 3B in the held state and conducts radio communication using either the antenna element 3A or the antenna element 3B. As a result, the reader 1 conducts radio communication with all the RFID tags T present in the cabinet 100. The reader 1 reads information relating to corresponding article B through each RFID tag T. The user can manage the storage state on the basis of the information reading result by the reader 1.

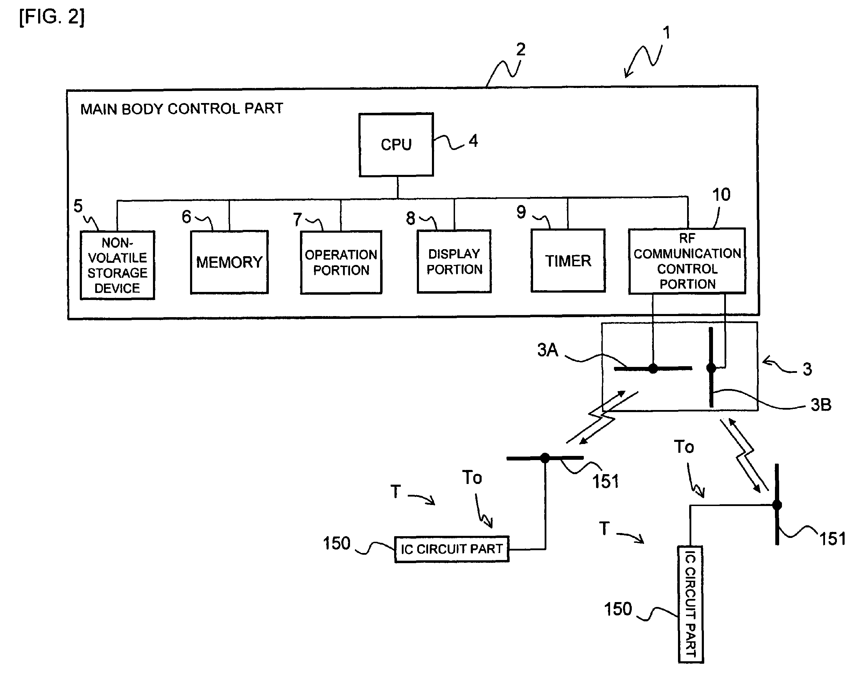

As shown in Fig. 2, the reader 1 has a main body control portion 2 and the reader antenna 3. The main body control portion 2 includes a CPU 4, a non-volatile storage device 5, memory 6, the operation portion 7, the display portion 8, a timer 9, and an RF communication control portion 10. The non-volatile storage device 5 includes a hard disk device and flash memory. The non-volatile storage device 5 stores various types of information such as arrangement distribution information, whose details will be described later, of the RFID tag T relating to radio communication by the reader 1 and management state of the articles B. The memory 6 includes a RAM, and a ROM, for example. To the operation portion 7, instructions or information is input from the user. The display portion 8 displays various types of information and messages. The timer 9 has a function to measure time. The RF communication control portion 10 controls radio communication with the RFID tag T through the reader antenna 3.

The reader antenna 3 has the horizontal antenna element 3A and the vertical element 3B as described above. Each of the antenna elements 3A and 3B is configured by a so-called dipole antenna, whose entire shape is substantially linear. The longitudinal direction of the horizontal antenna element 3A is in parallel with a width direction of the housing of the reader 1, that is, a horizontal direction in the reference attitude. The longitudinal direction of the vertical antenna element 3B is in parallel with a thickness direction of the housing of the reader 1, that is, a vertical direction in the reference attitude. The longitudinal direction of each of the antenna elements 3A and 3B is a polarization phase direction forming a potential plane of a wave, that is, a polarization phase. Hereinafter, in this embodiment, the polarization phase generated by the horizontal antenna element 3A is referred to as "horizontal polarization" and the polarization phase generated by the vertical antenna element 3B as "vertical polarization". The reader 3 may have another configuration different from the configuration provided with the two antenna elements 3A and 3B. That is, the reader antenna 3 may be provided with an antenna in another form such as a microstrip antenna. In this case, by changing the direction through which an electric current flows with respect to the antenna in another form, the polarization phase direction of the antenna can be switched.

The CPU 4 carries out signal processing according to a program stored in advance in the ROM while using a temporary storage function of the RAM. As a result, the CPU 4 carries out various controls of the entire reader 1.

The RFID tag T has the RFID tag circuit element To, which will be described later, provided with the tag antenna 151 and the IC circuit part 150. The RFID tag T is configured by disposing the RFID tag circuit element To on a base, not shown. The tag antenna 151 is a dipole antenna having substantially linear shape in its entire shape in this example as described above. The longitudinal direction of the tag antenna 151 is the polarization phase direction forming the polarization phase.

The CPU 4 processes signals read of the IC circuit part 150 of the RFID tag circuit element To so as to read information. The CPU 4 also creates various commands, which will be described later, to access the IC circuit part 150 of the RFID tag circuit element To.

The RF communication control portion 10 accesses information of the IC circuit part 150 of the RFID tag circuit element To, that is, RFID tag information including a tag ID, through the reader antenna 3. That is, the RF communication control portion 10 includes a switch portion 341, a transmitting portion 212, a receiving portion 213, and a transmit-receive splitter 214. The switch portion 341 switches connection to the two antenna elements 3A and 3B on the basis of a signal from the CPU 4. The transmitting portion 212 transmits a signal to the RFID tag circuit element To through the reader antenna 3. The receiving portion 213 receives a response wave from the RFID tag circuit element To received by the reader antenna 3.

The switch portion 341 is a switch circuit using a known FET for high frequency or diode. The switch portion 341 selectively connects either the horizontal antenna element 3A or the vertical antenna element 3B to the transmit-receive splitter 214 on the basis of a control signal from the CPU 4.

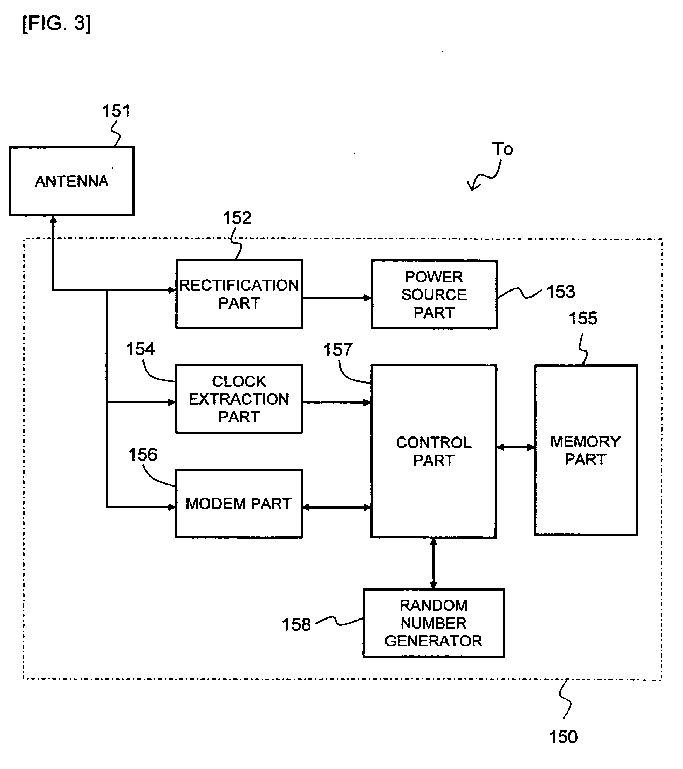

The RFID tag circuit element To provided on the RFID tag T is described by using Fig. 3.

The IC circuit part 150 includes a rectification part 152, a power source part 153, a clock extraction part 154, a memory part 155, a modem part 156, a random number generator 158, which will be described later, and a control part 157. The rectification part 152 rectifies an interrogation wave received by the tag antenna 151. The power source part 153 accumulates energy of the interrogation wave rectified by the rectification part 152 and uses the energy as a driving power source of the RFID tag circuit element To. The clock extraction part 154 extracts a clock signal from the interrogation wave received by the tag antenna 151 and supplies the signal to the control part 157. The memory part 155 stores a predetermined information signal. The random number generator 158 generates a random number when a response request command is received from the reader 1. To which identification slot a response signal should be output is determined by the random number. The control part 157 controls operations of the RFID tag circuit element To through the memory part 155, the clock extraction part 154, the random number generator 158, and the modem part 156, for example.

The modem part 156 demodulates an interrogation wave from the reader antenna 3 of the reader 1, received by the tag antenna 151. The modem part 156 also modulates a reply signal from the control part 157 and transmits it as a response wave, that is, a signal including the tag ID, from the tag antenna 151.

The random number generator 158 generates a random number from 0 to 2^{Q}-1 to a slot number specified value Q, hereinafter referred to simply as "Q value" as appropriate, specified in the response request command from the reader 1.

The control part 157 interprets a received signal demodulated by the modem part 156, generates a reply signal on the basis of the information signal stored in the memory part 155. Then, the modem part 156 transmits the reply signal through the tag antenna 151 in an identification slot corresponding to the random number generated by the random number generator 158.

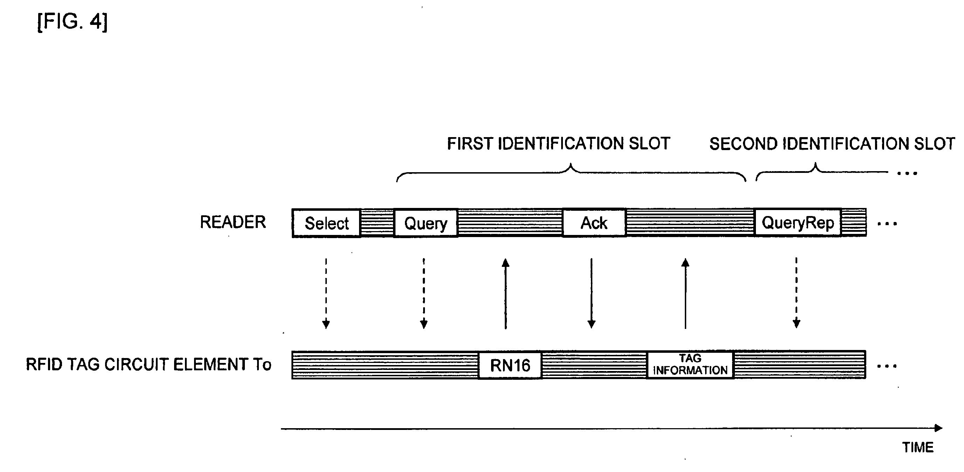

Subsequently, a signal transmitted and received between the reader 1 and the RFID tag T and a method of transmission and reception will be described. As shown in Fig. 4, the method of signal transmission and reception in an example shown in Fig. 4 conforms to the international standard of EPC global class-I Generation-II based on the known Random-Slotted Collision arbitration method. Also, Fig. 4 shows a change with time from the left side to the right side. Moreover, arrows shown between the reader 1 and the RFID tag T indicate transmission directions of the signal. If the other party of the transmission is unspecified, the arrow is shown by a broken line, while if the other party is specified, the arrow is shown by a solid line.

In Fig. 4, the reader 1 transmits a "Select" command to all the RFID tags T present in the communication area 20, first. This "Select" command is a command to specify a condition of the RFID tag T with which the reader 1 conducts radio communication from that time and after. By limiting the number of RFID tags T from which information is to be read by specifying various conditions using this command, radio communication can be conducted more efficiently. Only the RFID tags T satisfying the specified condition among the RFID tags T having received the "Select" command become capable of radio communication from that time and after. Fig. 4 shows only one RFID tag T satisfying the condition.

Subsequently, the reader 1 transmits a "Query" command, which is a reading command. The "Query" command is a command to request the RFID tag circuit element To to respond and transmit tag information including a tag ID, which is identification information. The "Query" command is also a search command to make a search under a condition that the number of RFID tag circuit elements To expected to respond is not known. The "Query" command includes the slot number specifying value Q specifying with a predetermined number such as any of the values from 0 to 15 in this example. When the "Query" command is transmitted from the RF communication control portion 10 through the reader antenna 3, the random number generator 158 of the RFID tag circuit element To of each RFID tag T generates a random number from 0 to 2^{Q}-1, that is, 2 raised to the Q minus one power. The generated random number is held in the RFID tag circuit element To as a slot count value S.

The reader 1 stands by for a response from each RFID tag circuit element To at a predetermined identification slot after transmitting the "Query" command. The identification slot is a time frame divided by a predetermined period after the "Query" command or a "QueryRep" command, which will be described later, is transmitted. The identification slot is usually repeated predetermined times continuously. Specifically, one first identification slot including the "Query" command and 2^{Q}-1 times of identification slots after a second identification slot including the "QueryRep" command, that is, 2^{Q} times of identification slots in total are repeated.

Then, as in the shown example, the RFID tag circuit element To having generated a value 0 as the slot count value S responds in the first identification slot including the "Query" command. The RFID tag circuit element To to respond transmits an "RN16" response in order to obtain permission to transmit the tag information as a response signal to the reader 1. The "RN16" response is generated using a 16-bit pseudo random number, for example.

The reader 1 having received the "RN16" response transmits an "Ack" command with contents responding to the received "RN16" response. This "Ack" command is a command to permit transmission of the tag information. The RFID tag circuit element To having received the "Ack" command determines whether or not the same "RN16" is included in the "RN16" response transmitted earlier by the RFID tag circuit element itself and the received "Ack" command. If the same "RN16" is included, the RFID tag circuit element To considers that transmission of the tag information is permitted and transmits the tag information including the tag ID. The signal transmission and reception in the single identification slot is carried out in this way.

Subsequently, in the second identification slot and after, the reader 1 transmits the "QueryRep" command instead of the "Query" command. Then, the reader 1 waits for a response of another RFID tag circuit element To, not shown, in an identification slot time frame provided immediately after the transmission. Each of the RFID tag circuit elements To having received the "QueryRep" command subtracts a value of its own slot count value S by one and holds the value. Then, each of the RFID tag circuit elements To conducts the signal transmission and reception including the "RN16" response with the reader 1 similarly to the above in the identification slot at the time when the slot count value S becomes the value 0.

In each identification slot, if there is no RFID tag circuit element To having the slot count value S as zero, transmission and reception other than the "Query" command or the "QueryRep" command is not carried out and the identification slot is finished after a predetermined time frame has elapsed.

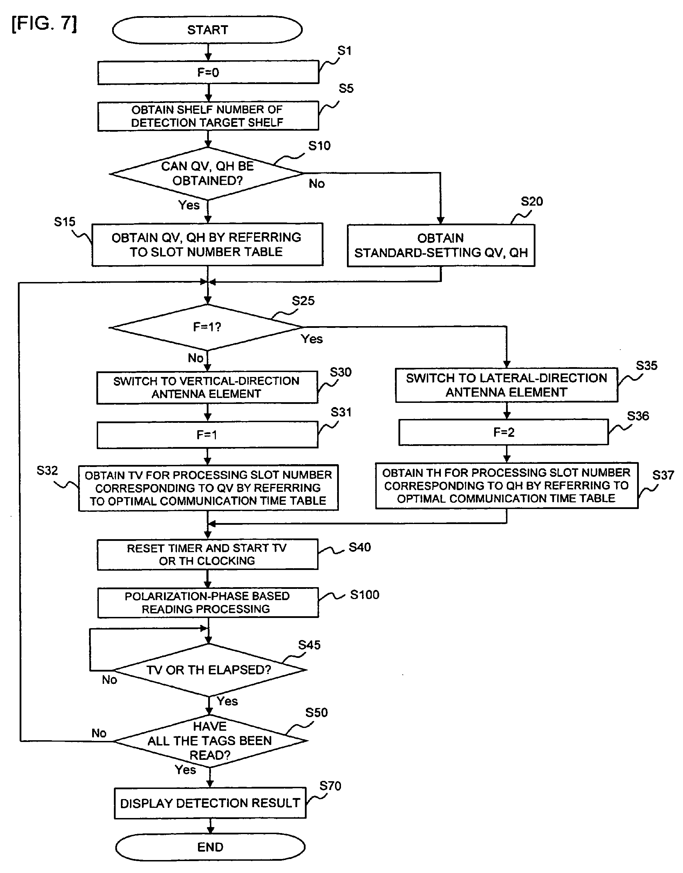

As described above, since the RFID tag circuit elements To return response signals in different identification slots, the reader 1 can clearly obtain the tag information of individual RFID tag circuit elements To without interference. In this embodiment, a series of processing units including the one first identification slot and the identification slots for the predetermined number of times after the second identification slot is called polarization-phase based reading processing (See Step S 100 in Fig. 7, which will be described later).

If the slot number specifying value Q is set sufficiently large, the number of identification slots 2^{Q} corresponding to the single polarization-phase based reading processing prepared by the reader 1 is set sufficiently larger than the number of RFID tag circuit elements To as communication targets. In this case, since the slot count value S of each RFID tag circuit element To is generated based on a random number as described above, a possibility that each RFID tag circuit element To transmits a response signal in a relatively evenly distributed manner among the 2^{Q} pieces of the identification slots increases. As described above, the response signal from the RFID tag circuit element To having the tag antenna 151 provided with the polarization phase matching the polarization phase of the reader antenna 3 can be clearly received by the reader 1 one by one without collision or interference.

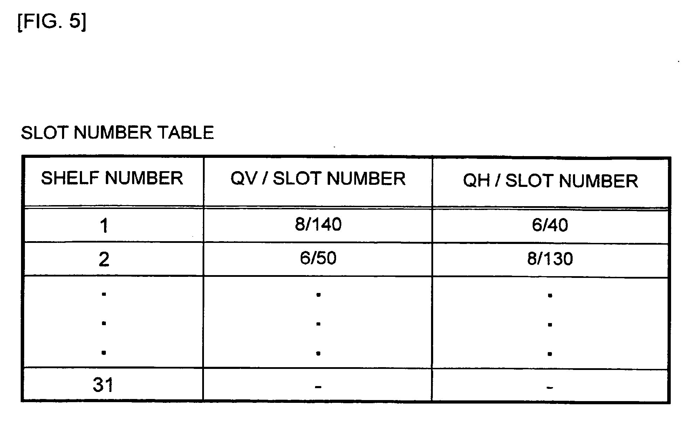

A slot number table stored in the reader 1 is described by using Fig. 5. This slot number table includes information recorded and held in the non-volatile storage device 5 of the reader 1.

In Fig. 5, the slot number table stores and records items of "QV" and "QH" corresponding to a plurality of cabinet numbers of the cabinet 100. In Fig. 1, only one cabinet 100 is shown. "QV" item records QV corresponding to radio communication in the vertical polarization direction as distribution-related information of the RFID tag circuit element To. This QV is roughly set in advance, for example, as a Q value for specifying the number of identification slots. "QH" item records QH corresponding to radio communication in the horizontal polarization direction as distribution-related information of the RFID tag circuit element To. This QH is roughly set in advance, for example, as a Q value for specifying the number of identification slots.

In the illustrated example, the setting is separately made for the RFID tag circuit element To with a polarization phase direction of the tag antenna 151 matching the vertical polarization phase, which is hereinafter referred to as the RFID tag circuit element To "arranged in the vertical polarization-phase direction", and the RFID tag circuit element To with a polarization phase direction of the tag antenna 151 matching the horizontal polarization phase, which is hereinafter referred to as the RFID tag circuit element To "arranged in the horizontal polarization-phase direction". The number of identification slots set for the RFID tag circuit elements To arranged in the vertical polarization phase direction stored in the cabinet 100 with the cabinet number 1 (See Fig. 1) is 140. Thus, QV = 8 is recorded in the "QV" item as a value specifying the minimum number of identification slots exceeding 140. This is because 2^7 = 128 for Q = 7 and 2^8 = 256 for Q = 8. Similarly, the number of identification slots set for the RFID tag circuit elements To arranged in the horizontal polarization phase direction stored in the cabinet 100 with the cabinet number 1 is 40. Thus, QH = 6 is recorded in the "QH" item as a value specifying the minimum number of identification slots exceeding 40. This is because 2^5 =32 for Q = 5 and 2^6 = 64 for Q = 6.

The set values described in the "QV" and "QH" items may be those set appropriately and stored in the reader 1 according to the past reading achievements, for example, by the reader 1. Alternatively, the set values described in the "QV" and "QH" items may be those set according to a storage state and stored in the reader 1 if the storage state of the articles B is roughly known. In this embodiment, the set value described in the table is used as an initial value, and the reader 1 starts information reading. The reader 1 estimates the number of existing RFID tag circuit elements To arranged in the vertical polarization-phase direction and the horizontal polarization-phase direction, respectively, on the basis of the number of collisions of response signals detected in the information reading and excess and deficiency of the identification slots. Then, the reader 1 continues the information reading while modifying the QV and QH as appropriate in accordance with the estimated number of existing RFID tag circuit elements (details will be described later).

There can be a case in which the QV and QH are not set by the above method as in the cabinet 100 with a cabinet number 31 shown in the figure and no entry has been made in the "QV" or "QH". In such a case, the reader 1 starts reading using standard set values of the QV and QH fixedly set in advance in the reader 1.

As already described, commands transmitted from the reader 1 side to the RFID tag circuit element To include the "Select" command, "Query" command, "Ack "command, and "QueryRep" command. According to the protocol conforming to the international standard of EPC global Class-I Generation-II, communication time lengths of these transmission commands are determined by setting of a transmission command parameter such as tari and "0"/"1" code length ratio. The transmission command parameter is a factor affecting a time length of a command. On the other hand, the respective communication time lengths of the "RN16" response and tag information responded from the RFID tag circuit element To are determined by setting of tag response parameters such as LF and M value. The tag response parameter is a factor affecting a time length per response such as a response frequency.

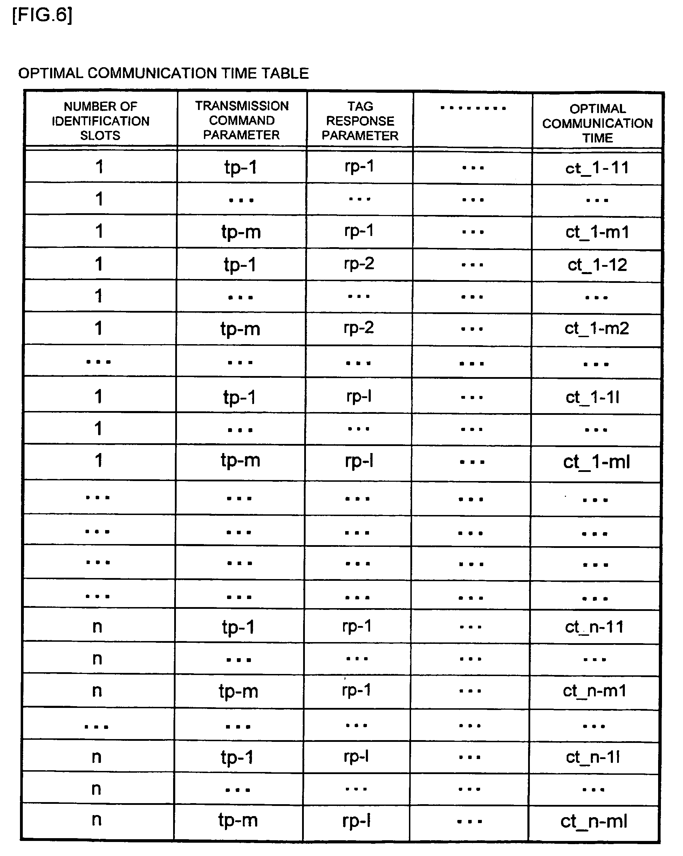

In this embodiment, the non-volatile storage device 5 of the reader 1 stores an optimal communication time table as shown in Fig. 6 in advance as correlation. In Fig. 6, as an example of the transmission command parameter, different m pieces of tp-1, tp-2... and tp-m are stored. Also, as an example of the tag response parameter, different 1 pieces of rp-1, rp-2... and rp-1 are stored. For example, with respect to one identification slot number having slot number of one, m × 1 combinations of the m pieces of transmission command parameters and the 1 pieces of tag response parameters are present. Then, a communication time required when the reader 1 conducts communication using the identification slot number is uniquely determined according to each of the m x 1 combinations. Then, a time obtained by adding slight allowance, for example, to this uniquely determined time is the optimal communication time. That is, the optimal communication time is uniquely set as an optimal communication time when the combination of the transmission command parameter and the tag response parameter is used for the applicable identification slot number and stored in the reader 1. As described above, setting is sequentially made as the slot numbers 1, 2, ..., n and stored in advance in the table.

Usually, the transmission command parameter or tag response parameter is not selected or set by a user. The transmission command parameter or tag response parameter is set as appropriate at factory shipment for each reader 1, for example. As a result, by referring to this optimal communication time table, the optimal communication time required for one polarization phase based reading processing is obtained. That is, the corresponding optimal communication time is obtained on the basis of the combination of various parameters such as the identification slot number calculated from the Q value to be applied, the transmission command parameter, and the tag response parameter relating to the single polarization-phase based reading processing. In this embodiment, the optimal communication time is used as a switching time interval (see time TV, TH, which will be described later) between the vertical antenna element 3B and the horizontal antenna element 3A. According to this switching time interval, communication by the vertical polarization phase and communication by the horizontal polarization phase are switched to each other.

As described above, the slot number table shown in Fig. 5 and the optimal communication time table shown in Fig. 6 are recorded and held in the non-volatile storage device 5 of the reader 1 as correlation storage means. However, the slot number table and the optimal communication time table may be obtained from an outside server, for example, through a wired or wireless network.

A control procedure executed by the CPU 4 of the reader 1 is described by using Fig. 7.

In Fig. 7, this flow is started after power is on in this example. It is indicated by a "START" position. The flow may be started when an operation to start the RFID tag T reading processing is carried out in the operation portion 7.

First, at Step S1, the CPU 4 resets a flag F used for switching between the vertical polarization and the horizontal polarization to zero.

After that, at Step S5, the CPU 4 obtains the cabinet number of the cabinet 100 as a detection target on the basis of an operation input by the user in the operation portion 7, for example.

Then, the routine goes to Step S10, where the CPU 4 determines whether or not the QV for vertical polarization and the QH for horizontal polarization corresponding to the cabinet number input at Step S5 can be obtained, that is, whether the QV and the QH have been already set for the cabinet 100 with the applicable cabinet number or not. At this time, the CPU 4 refers to the slot number table (See Fig. 5) recorded in the non-volatile storage device 5 so as to make the determination. If the two Q values corresponding to the cabinet number, that is, QH and QV can be obtained, the determination at Step S10 is satisfied. In this case, the CPU 4 refers to the slot number table at Step S15 and obtains the QV and QH corresponding to the cabinet number. After that, the routine goes to Step S25.

On the other hand, if the two Q values corresponding to the cabinet number, that is, the QV and QH, cannot be obtained, the determination at Step S10 is not satisfied. In this case, the CPU 4 obtains the QH and QV described in the table shown in Fig. 5 as initial values at Step S20. When Step S20 is finished as above, the routine goes on to Step S25.

At Step S25, the CPU 4 determines if the flag F is F = 1 indicating communication with the vertical polarization through the vertical antenna element 3B. If the flag F is the initial value 0 or 2 indicating communication with the horizontal polarization through the horizontal antenna element 3A, the determination at Step S25 is not satisfied, and the routine goes to Step S30.

At Step S30, the CPU 4 outputs a control signal to the switch portion 341 so as to switch the switch portion 341. As a result, the switch portion 341 connects the vertical antenna element 3B to the transmit-receive splitter 214. After that, at Step S31, the CPU 4 sets the flag F to one corresponding to the vertical polarization.

Then, the routine goes to Step S32, where the CPU 4 calculates the corresponding identification slot number, that is, 2^{Q}, from the QV for vertical polarization obtained at Step S15 or Step S20, or increased or decreased or maintained at Step S175 or Step S 180, which will be described later. Moreover, the CPU 4 obtains the optimal communication time TV for the vertical polarization corresponding to the calculated identification slot number, giving consideration to the combination of various parameters. At this time, the CPU 4 refers to the optimal communication time table (See Fig. 6) recorded in the non-volatile storage device 5 for the obtainment. After that, the routine goes to Step S40.

On the other hand, if the flag F is one indicating communication with the vertical polarization through the vertical antenna element 3B at Step S25, the determination at Step S25 is satisfied, and the routine goes to Step S35.

At Step S35, the CPU 4 outputs a control signal to the switch portion 341 so as to switch the switch portion 341. As a result, the switch portion 341 connects the horizontal antenna element 3A to the transmit-receive splitter 214. After that, at Step S36, the CPU 4 sets the flag F to two corresponding to the horizontal polarization.

Then, the routine goes to Step S37, where the CPU 4 calculates the corresponding identification slot number, that is, 2^{Q}, from the QH for horizontal polarization obtained at Step S 15 or Step S20, or increased or decreased or maintained at Step S 175 or Step S 180, which will be described later. Moreover, the CPU 4 obtains the optimal communication time TH for the horizontal polarization corresponding to the calculated identification slot number, giving consideration to the combination of various parameters. At this time, the CPU 4 refers to the optimal communication time table (See Fig. 6) recorded in the non-volatile storage device 5 for the obtainment. After that, the routine goes to Step S40.

At Step S40, the CPU 4 resets clocking contents of the timer 9. Then, the CPU 4 starts clocking till the optimal communication time TV obtained at Step S32 or the optimal communication time TH obtained at Step S37.

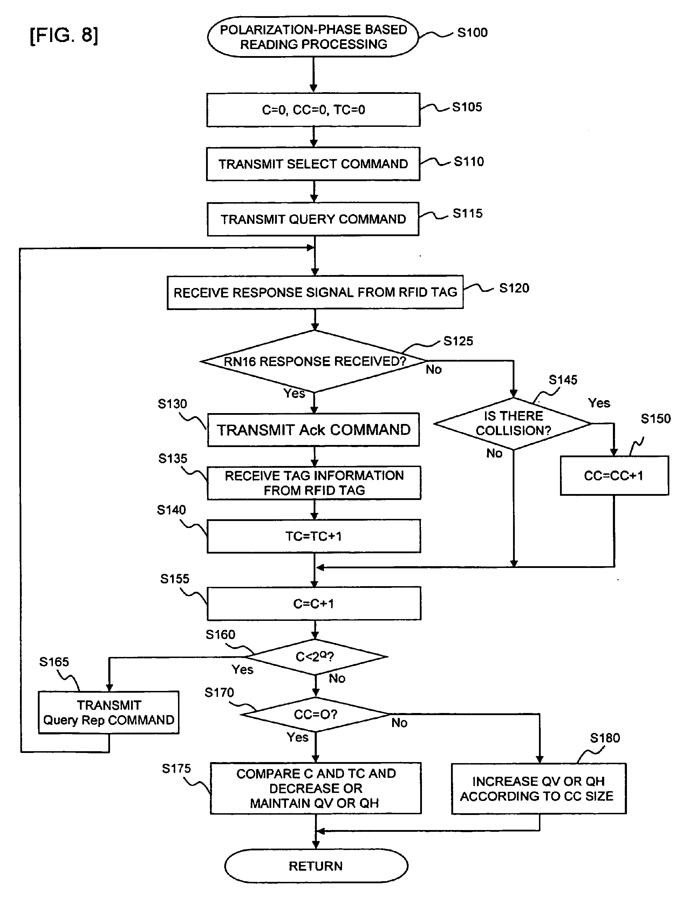

After that, the routine goes to Step S100, where the CPU 4 carries out polarization-phase based reading processing. In the polarization-phase based reading processing, radio communication with the RFID tag circuit element To is conducted repeatedly the number of times equal to the identification slot number calculated at Step S32 or Step S37 (See Fig. 8, which will be described later). The identification slot number in the polarization-phase based reading processing is the Q value at this time, that is, the identification slot number calculated from the QH or QV. Also, as will be described later, in the polarization-phase based reading processing at Step S100, the QV and QH are modified according to excess or deficiency of the identification slot number on each polarization phase.

Then, the routine goes to Step S45, where the CPU 4 determines whether or not the optimal communication time TV for the vertical polarization or the optimal communication time TH for the horizontal polarization has elapsed after start at Step S40 by clocking by the timer 9. If the optimal communication time TV or TH has not elapsed, the routine waits in a loop. If the optimal communication time TV or TH has elapsed, the determination at Step S45 is satisfied, and the routine goes to Step S50.

At Step S50, the CPU 4 determines if information reading from the RFID tag circuit element To of all the RFID tags T present in the communication area 20 of the reader antenna 3 has been finished or not.

The RFID tag circuit element To in this embodiment has known specification such as ISO/IEC18000-6 type C, for example, though detailed explanation is omitted. Thus, even if the RFID tag circuit element To receives the "Query" command specifying contents of a session flag several times, the tag circuit element responds to the "Query" command normally only once at the first time and then, no longer responds to the "Query" command received after that. That is, in this embodiment, the RFID tag circuit element To for which information reading has been carried out once by the reader 1 does not respond to an inquiry from the reader 1 after that. As a result, the reader 1 does not carry out reading of the same RFID tag circuit element To doubly.

Therefore, at Step S50, the CPU 4 determines whether or not there is any RFID tag circuit element To left for which the reading has not been carried out. Specifically, the CPU 4 determines that the remaining number is zero, that is, the reading from all the RFID tag circuit elements To has been completed with a state in which a response signal from the RFID tag circuit element To is not received by any one of the slots, for example. Alternatively, the CPU 4 may determine that the reading has been completed when a state in which a response signal from the RFID tag circuit element To is not received by any one of the slots is repeated a predetermined number of times or when the state continues for a predetermined time. Moreover, if the total number of the RFID tag circuit elements To as targets is known in advance, the following method may be employed. That is, the CPU 4 counts in advance the number of RFID tag circuit elements To for which the information reading has been completed, that is, the number of the RFID tag circuit elements To from which the tag IDs have been obtained and determines if the number has reached the total or not.

The determination at Step S50 is not satisfied till the information reading has been completed for all the RFID tag circuit elements To, and the routine returns to Step S25, where the similar procedure is repeated. That is, in the case of F = 1, the CPU 4 carries out the information reading using the horizontal polarization through the horizontal antenna element 3A only for the optimal communication time TH by the procedures at Step S35 -> Step S36 -> Step S37 -> Step S40 -> Step S100 -> Step S45 in this order. On the other hand, in the case of F=2, the CPU 4 carries out the information reading using the vertical polarization through the vertical antenna element 3B only for the optimal communication time TV by the procedures at Step S30 -> Step S31 -> Step S32 -> Step S40 -> Step S100 -> Step S45 in this order. Then, the CPU 4 alternately repeats the procedures in the case of F = 1 and the procedures in the case of F = 2. During this repetition, since the RFID tag circuit element To having responded once no longer responds as described above, it is controlled so that the identification slot number is gradually decreased at Step S 100 (See Step S 175, which will be described later). Then, according to the decrease of the identification slot number, the optimal communication time TH or TV set referring to the optimal communication time table at Step S37 or Step S32 gradually becomes short.

As a result, after the information reading of this time using the horizontal polarization at Step S35 -> ... -> Step S45 with F = 1, the information reading using the vertical polarization is carried out in-between, and the information reading using the horizontal polarization next time is carried out. The optimal communication time TH in the information reading with the horizontal polarization next time is shorter by the number of RFID tag circuit elements To arranged in the horizontal polarization-phase direction for which the information reading of this time has been completed. Also, after the information reading of this time using the vertical polarization at Step S39 -> ... -> Step S45 with F = 2, the information reading using the horizontal polarization is carried out in-between, and the information reading using the vertical polarization next time is carried out. The optimal communication time TV in the information reading with the vertical polarization next time is shorter by the number of RFID tag circuit elements To arranged in the vertical polarization-phase direction for which the information reading of this time has been completed. As described above, the reader 1 carries out information reading while switching between the horizontal polarization and vertical polarization using the optimal communication time TV for horizontal polarization and the optimal communication time TH for vertical polarization. The reader 1 changes the TH and TV according to distribution of the RFID tag circuit elements To arranged in the horizontal polarization phase and vertical polarization phase directions for which the information reading has not been finished yet. However, the reader 1 uses the TH and TV set at Step S 15 or Step S20 only for the information reading at the first session as described above.

When the information reading from all the RFID tag circuit elements To of all the cabinets 100 is finished eventually by means of repetition as above, the determination at Step S50 is satisfied, and the routine goes to Step S70. At Step S70, a detection result of the polarization-phase based reading processing is displayed by the display portion 8 on the basis of control by the CPU 4, and this flow is finished. Though not particularly shown in detail, the display portion 8 may display information read of the RFID tag circuit element To with the vertical polarization and horizontal polarization separately as display of the detection results. Alternatively, the display portion 8 may display the respective numbers of collision times, Q values or identification slot number as display of the detection results.

A detailed procedure of the polarization-phase based reading processing at Step S 100 described above is described by using Fig. 8.

In Fig. 8, the CPU 4 resets values of a counter variable C of the identification slot, a counter variable CC of the number of collision times, and a counter variable TC of the number of reading times to zero, respectively, at Step S105.

After that, at Step S110, the CPU 4 transmits the "Select" command signal to all the RFID tags T present in the communication area 20 through the RF communication control portion 10 and the horizontal antenna element 3A or the vertical antenna element 3B of the reader antenna 3.

Then, the routine goes to Step S 115, where the CPU 4 transmits the "Query" command signal through the RF communication control portion 10 and the horizontal antenna element 3A or the vertical antenna element 3B similarly to the "Select" command signal. The time interval between the plurality of commands transmitted and received is adjusted as appropriate by the CPU 4, and the same applies to the following.

After that, at Step S120, the CPU 4 receives a response signal from the RFID tag circuit element To of the RFID tag T through the antenna element 3A or 3B and the RF communication control portion 10 only for a predetermined time. After that, the CPU 4 determines at Step S125 if the "RN16" response has been received or not as a response signal during the receiving time. In this determination, if the "RN16" response is received, the determination at Step S125 is satisfied. In this case, the CPU 4 considers that there is the RFID tag circuit element To responding at the applicable identification slot, and the routine goes to Step S 130.

At Step S 130, the CPU 4 transmits the "Ack" command with contents including the "RN16" response received at Step S120 as it is through the RF communication control portion 10 and the antenna element 3A or 3B. After that, at Step S 135, the CPU 4 receives the RFID tag information including the tag ID, which is the identification information, from the RFID tag circuit element To through the RF communication control portion 10 and the antenna element 3A or 3B. After that, the CPU 4 adds one to the value of the counter variable TC of the number of reading times at Step S 140. Then, the routine goes to Step S155.

On the other hand, when the "RN16" response is not received normally in the determination at Step S125, that is, if the plurality of "RN16" responses collides against each other or no "RN16" response is received, the determination at Step S125 is not satisfied, and the routine goes to Step S 145.

At Step S145, the CPU 4 determines if a cause of the determination at Step S125 that the "RN16" response has not been normally received is a collision or not. If the cause is not a collision, the determination at Step S 145 is not satisfied. In this case, the CPU 4 considers that there is no RFID tag circuit element To responding in the applicable identification slot, and the routine goes to Step S155. On the other hand, if the cause is a collision, the determination at Step S 145 is satisfied. In this case, the CPU 4 adds one to the value of the counter variable CC of the number of collision times at Step S150. Then, the routine goes to Step S155.

At Step S155, the CPU 4 adds one to the value of the counter variable C of the identification slot. After that, the CPU 4 determines at Step S160 if the value of the variable C is smaller than 2^{Q} or not, that is, the last identification slot has been finished or not. The Q value used here is a Q value corresponding to the polarization phase direction of the antenna element 3A or 3B connected at that time and the QH for horizontal polarization or QV for vertical polarization. If the value of the counter variable C is smaller than 2^{Q}, the determination at Step S 160 is satisfied. In this case, the CPU 4 considers that the current polarization-phase based reading processing has not been finished yet, and the routine goes to Step S165.

At Step S165, the CPU 4 transmits the "QueryRep" command through the RF communication control portion 10 and the antenna element 3A or 3B and starts a new identification slot. After that, the routine returns to Step S120, where the similar procedure is repeated.

On the other hand, in the determination at Step S160, if the value of the variable C is 2^{Q} or more, the determination at Step S 160 is not satisfied. In this case, the CPU 4 considers that the last identification slot is finished in the polarization-phase based reading processing, and the routine goes to Step S 170.

At Step S 170, the CPU 4 determines if the value of the counter variable CC of the number of collision times is zero or not, that is, whether or not there has been even a single collision of the "RN16" response in the polarization-phase based reading processing immediately before. If the value of the counter variable CC is zero, the determination at Step S 170 is satisfied. In this case, the CPU 4 considers that there is not even a single collision of the "RN16" response in the polarization-phase based reading processing immediately before, and the routine goes to Step S 175.

At Step S 175, the CPU 4 compares the value of the counter variable C of the identification slot and the value of the counter variable TC of the number of reading times and examines decrease correction of the corresponding Q value, that is, QV or QH. If the tag information can be read without even a single collision of the "RN16" response, there is a possibility that the identification slot number C in the polarization-phase based reading processing immediately before satisfies the required number for the TC corresponding to the number of RFID tags T as detection targets, which is hereinafter referred to simply as "number TC" as appropriate, or is excessively larger than that.

Here, the required minimum identification slot number in order to avoid a collision of the "RN 16" responses to the number TC of the RFID tags T is the number TC of the RFID tags T in this example as described above. If the value C corresponding to the identification slot number in the polarization-phase based reading processing actually carried out immediately before, which is hereinafter referred to simply as "identification slot number C" as appropriate, is twice or more, that is, in the case of C ≥ 2 × TC, avoidance of the collision of the "RN16" responses can be maintained even if the identification slot number in the polarization-phase based reading processing to a half by decreasing the corresponding Q value by one. If the value C is four times or more the value TC, the corresponding Q value may be decreased by 2.

The above examination method is shown as only an example. At Step S 175, the CPU 4 carries out decrease-correction of the Q value corresponding to the polarization-phase direction, that is, QV or QH, as necessary so that the identification slot number C in the polarization-phase based reading processing does not become excessively larger than the number TC of the RFID tags T as detection targets. Also, if the CPU 4 determines that the identification slot number C in the polarization-phase based reading processing immediately before is appropriate for the number TC of the RFID tags T as detection targets, the CPU 4 maintains the Q value corresponding to the identification slot number, that is, QV or QH as it is.

On the other hand, in the determination at Step S 170, if the value of the counter variable CC is one or more, the determination is not satisfied. In this case, the CPU 4 considers that there has been one or more collision of the "RN16" response in the polarization-phase based reading processing immediately before, and the routine goes to Step S 180.

At Step S 180, the CPU 4 examines increase-correction of the corresponding Q value, that is, QV or QH, according to the size of the counter variable CC of the number of collision times. In this case, since the collision of the "RN16" responses has occurred at least once, there is a possibility that the identification slot number C in the polarization-phase based reading processing immediately before does not satisfy the required number with respect to the number TC of the RFID tags T as detection targets.

Here, suppose that two RFID tags T transmit the "RN16" responses at the same time on one collision, for example. In this case, the number obtained by adding the number twice the value CC corresponding to the number of collision times, which is hereinafter referred to simply as "collision number of times CC", to the number TC of the RFID tags T for which reading of the tag information has been successful, that is, TC + 2 × CC is estimated to be the total of the RFID tags T corresponding to the polarization-phase direction. Then, the estimated number is estimated to be the required minimum identification slot number for avoiding a collision of the "RN16" responses. Therefore, by calculating the Q value specifying the minimum identification slot number exceeding this estimated required slot number, that is, QV or QH, the CPU 4 can carry out appropriate increase-correction of the Q value. Considering also a case in which three or more RFID tags T transmit the "RN16" responses at the same time in a single collision, the CPU 4 preferably sets the required slot number large with an allowance.

The above examination method is shown as only an example. At Step S 180, the CPU 4 carries out increase-correction of the Q value corresponding to the polarization-phase direction, that is, QV or QH, as necessary so that the identification slot number C in the polarization-phase based reading processing does not become excessively smaller than the number TC of the RFID tags T as detection targets.

If Step A 175 or Step S 180 is completed as described above, this routine is finished.

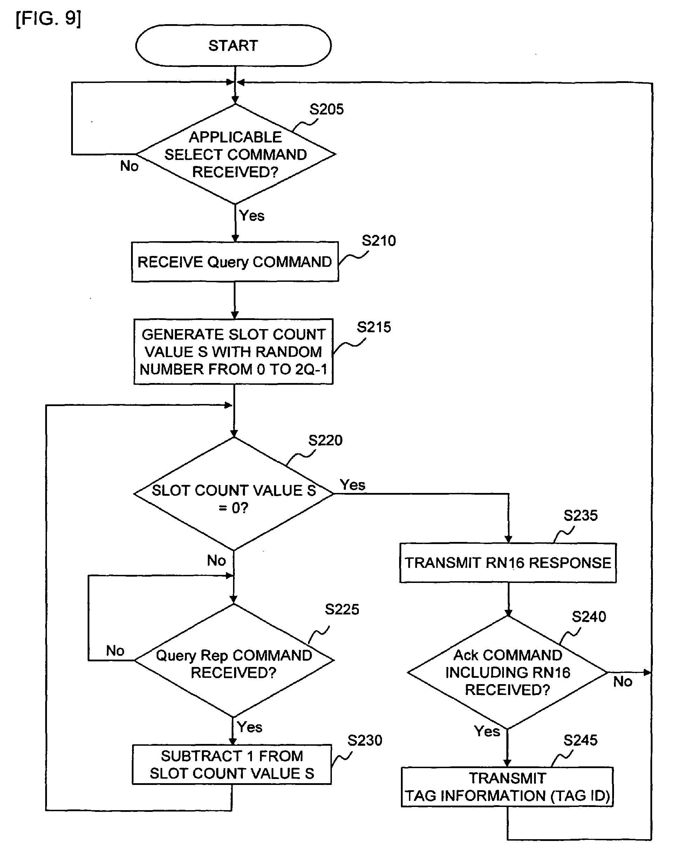

A control procedure executed by the control part 157 of the RFID tag circuit element To shown in Fig. 3 is described by using Fig. 9. Though detailed description is omitted, if the RFID tag circuit element To receives an initialization command, and wireless power is given by the initialization signal, the control part 157 is initialized. For example, if this initialization is carried out, the RFID tag circuit element To is actuated, and this flow is started. In the figure, the start of the flow is indicated by the "START" position.

First, at Step S205, the control part 157 interprets a command content of the "Select" command from the reader antenna 3 of the reader 1, received by the tag antenna 151 immediately after the RFID tag circuit element To is actuated. Then, the control part 157 determines if the RFID tag T is applicable to a specification condition included in the command content, that is, the condition of the RFID tag T to be read by the reader 1 or not. If the RFID tag T is not applicable to the specification condition, the determination at Step S205 is not satisfied, and the same procedure is repeated and the control part stands by in a loop till the "Select" command including the specification condition to which the RFID tag T is applicable is received. On the other hand, if the "Select" command including the specification condition to which the RFID tag T is applicable is received, the determination at Step S205 is satisfied, and the routine goes to Step S210.

At Step S210, the control part 157 controls reception so that the command content of the "Query" command from the reader antenna 3 of the reader 1, received by the tag antenna 151 is interpreted. At this time, the control part 157 stores the slot number specifying value Q included in the "Query" command, that is, the QV or QH, in the memory part 155.

Subsequently, the routine goes to Step S215, where the control part 157 generates a random number from 0 to 2^{Q}-1 by the random number generator 158 on the basis of the slot number specifying value Q stored in the memory part 155 at Step S210. Then, the control part 157 sets the generated random number value as a slot count value S. By means of the slot count value S, the identification slot for the RFID tag T to transmit a response signal, that is, the "RN16" response, is determined.

Subsequently, the routine goes to Step S220, where the control part 157 determines if the slot count value S is zero or not. If the slot count value S is not zero, the determination at Step S220 is not satisfied. In this case, the control part 157 considers that the RFID tag T has not yet arrived at the identification slot to transmit the response signal, and the routine goes to Step S225.

At Step S225, the control part 157 determines whether or not the RFID tag T has received the "QueryRep" command transmitted from the reader 1 at Step S165 in the flow in Fig. 8 through the tag antenna 151. The control part 157 repeats the reception-control for the identification slot at that time till the "QueryRep" command is received. If the "QueryRep" command is received, the determination at Step S225 is satisfied, and the routine goes to Step S230. At Step S230, the control part 157 subtracts one from the slot count value S. After that, the routine returns to Step S220, where the similar procedure is repeated.

On the other hand, if the slot count value S is zero in the determination at Step S220, the determination at Step S220 is satisfied. In this case, the control part 157 considers that the RFID tag circuit element To has arrived at the identification slot to transmit a response signal, and the routine goes to Step S235. At Step S235, the control part 157 generates the "RN16" response as a response signal in the modem part 156 using a 16-bit pseudo random number, for example. The modem part 156 returns the generated "RN16" response to the reader 1 through the tag antenna 151 at predetermined timing.

After that, the routine goes to Step S240, where the control part 157 determines whether or not the RFID tag T has received the "Ack" command with the content including the "RN16" response transmitted at Step S235 as it is through the tag antenna 151. If the "Ack" command has been received through the tag antenna 151 and the content includes the "RN16" response as it is, transmitted previously by the RFID tag circuit element To itself, the determination at Step S240 is satisfied. In this case, the control part 157 considers that the RFID tag circuit element To is allowed to transmit the tag information from the reader 1, and the routine goes to Step S245.

At Step S245, the control part 157 transmits the tag information including the tag ID of the RFID tag circuit element To to the reader 1 through the tag antenna 151. As described above, in this embodiment, the RFID tag circuit element To having thus transmitted the tag information to the reader 1 once does not respond to the "Query" command received after that. Then, the routine returns to Step S205, where the similar procedure is repeated.

On the other hand, in the determination at Step S240, if the control part 157 has not received the "Ack" command through the tag antenna 151 or even if the command has been received, the content does not include the "RN16" response transmitted previously as it is, the determination is not satisfied. In this case, the control part 157 considers that radio communication failed for some external factor or a collision with the "RN16" response from another RFID tag circuit element To occurred in the same identification slot. Then, no signal is transmitted, and the routine returns to Step S205.

In the above, the procedure at Step S 15 and Step S20 in the flow of Fig. 7 and the procedure for calculating the corresponding slot number at Step 32 or Step S37 after the QV or QH is adjusted at Step S175 and Step S180 in Fig. 8 function as distribution-related information obtainment means described in each claim.

Also, the procedures at Step S30 and Step S35 function as polarization-phase switching means. Also, the procedures to calculate the optimal communication times TV and TH at Step S32 and Step S37 function as switching setting means. Among these procedures, the first procedures at Step S32 and Step S37 at which the optimal communication times TV and TH are calculated on the basis of the QV and QH at Step S15 or Step S20 after the flow is started in Fig. 7 function as initial value setting means.

The procedure at Step S115 in the flow of Fig. 8 functions as transmission control means. The procedures at Step S 120 and Step S135 function as reception control means. The procedures at Step S 175 and Step S 180 function as slot number control means.

As described above, in this embodiment, the reader 1 carries out information reading while switching between the horizontal polarization and vertical polarization of the reader antenna 3 using the optimal communication time TV for horizontal polarization and the optimal communication time TH for vertical polarization. In the information reading, the reader 1 varies the TH and TV according to distribution of the RFID tag circuit elements To arranged in the horizontal polarization-phase direction and the vertical polarization-phase direction. That is, the reader 1 first carries out polarization-phase switching using the TH and TV set at Step S 15 or Step S20. After that, the reader 1 varies the TH and TV according to the distribution of the RFID tag circuit elements To arranged in the horizontal polarization-phase direction and the vertical polarization-phase direction for which the information reading has not been finished yet (See Step S32 and Step S37).

As a result, if the polarization-phase direction of the reader antenna 3 matches that of the tag antennas 151 of the RFID tag circuit elements To which are distributed relatively in a large number, the reader 1 maintains the polarization-phase direction for a relatively long time. As a result, waste such that the communication time runs short and the number of communication retry times is increased and preamble, that is, the "Select" command at the beginning of the polarization-phase based reading processing is transmitted repeatedly can be prevented. On the other hand, if the polarization-phase direction of the reader antenna 3 matches that of the tag antennas 151 of the RFID tag circuit elements To which are distributed relatively in a small number, the reader 1 maintains the polarization-phase direction only for a short time. As a result, waste of a useless blank time during which information transmission and reception is not carried out can be prevented. Therefore, even if distribution of the polarization-phase direction of the tag antennas 151 in the plurality of the RFID tag circuit elements To is biased, the reader antenna 3 can be switched in a mode corresponding to the bias. As a result, lean and efficient communication can be realized.

Also, particularly in this embodiment, at Step S20 in the flow of Fig. 7, the CPU 4 of the reader 1 obtains the value described in the table shown in Fig. 5, that is, QH and QV, as initial values. As a result, if a distribution number of the RFID circuit elements To and the corresponding identification slot number is known in advance from past communication achievement history, simulation and separate information, for example, the CPU 4 can set the first optimal communication times TV and TH appropriately to some degree on the basis of these known values. In this case, instead of the known values for the communication area 20, the CPU 4 may use known values in a larger area including them such as in the entire cabinet 100 as a peripheral area of the reader 1, for example. As a result, as compared with the case in which there is no standard set value on the basis of such known information, the reader 1 can achieve optimization of communication efficiency rapidly.

Also, particularly in this embodiment, the CPU 4 variably sets the number of identification slots on the basis of a reception state of the "RN16" response through the procedures at Step S 175 and Step S 180 in the flow of Fig. 8. As a result, occurrence of a collision or a blank slot is avoided as much as possible, and efficient communication can be conducted.

Also, particularly in this embodiment, if a collision of the "RN16" responses occurs, the number of identification slots runs short for the number of "RN16" responses, and the CPU 4 increases the number of identification slots through the procedure at Step S 180 so as to increase the corresponding Q value. If excessively many blank identification slots are generated, the number of identification slots is too large for the number of "RN16" responses, and the CPU 4 decreases the number of identification slots through the procedure at Step S175 so as to decrease the corresponding Q value. Also, if there is no collision of the "RN16" response and the tag information is obtained, the number of the identification slots is just right for the number of the "RN16" responses, the CPU 4 maintains the number of identification slots without increase or decrease. By means of such control by the CPU 4, the reader 1 can reliably conduct efficient communication.

Also, particularly in this embodiment, correlation between the number of identification slots corresponding to each of the QV and QH and the optimal communication times TV and TH required for processing of all the identification slot numbers, respectively, is stored in the non-volatile storage device 5 as the optimal communication time table as shown in Fig. 6. The CPU 4 carries out switching of the polarization-phase direction of the reader antenna 3 on the basis of the optimal communication times. As a result, the optimal TV and TH corresponding to the optimal identification slot numbers can be set easily.

Also, particularly in this embodiment, the reader 1 uses the number of identification slots, considering close association with the number of RFID tag circuit elements To, as information relating to distribution by polarization-phase direction. The reader 1 uses the Q value in the slot number table. For example, if the number of identification slots is too small in radio communication this time and a collision occurs, the number of the RFID tag circuit elements To as communication targets is estimated to be relatively large, and the CPU 4 increases the number of identification slots at Step S180 for smooth communication next time. Then, the CPU 4 sets the optimal communication time TV or TH referring to the optimal communication time table on the basis of the increased identification slot number in radio communication executed at Step S32 or Step S37 returning from Step S50. As a result, the CPU 4 makes the TV or TH relatively large so that when the polarization-phase direction of the reader antenna 3 as the vertical polarization or horizontal polarization matches that of the tag antennas 151 of the relatively large number of RFID tag circuit elements To, the direction is maintained for a relatively long time. As described above, even without directly handling the number of RFID tag circuit elements To, that is, the distribution number of the RFID tag circuit elements To by the polarization-phase direction of the tag antenna 151, the CPU 4 can execute the optimization control of communication efficiency easily using the number of identification slots.

The CPU 4, when switching the polarization-phase direction in this optimal communication time, may estimate the distribution number of the RFID tag circuit elements To as communication targets and use it as information relating to the distribution by polarization-phase direction. In this case, the CPU 4 uses vertical and horizontal tag number table, not shown, recording estimated distribution numbers of the RFID tag circuit elements To corresponding to each polarization-phase direction instead of the slot number table in Fig. 5. This table is stored in the non-volatile storage device 5 or the outside server, for example. When the estimated distribution number is obtained for each polarization-phase direction, the CPU 4 may calculate the required slot number and the corresponding Q value, that is, QV or QH, respectively.

Specifically, if a collision occurs in the identification slot in radio communication conducted this time, the CUP 4 estimates at Step S180 that the number of RFID tag circuit elements To as communication targets is slightly larger than the number of the identification slots. This procedure functions as tag number estimating means. Then, at Step S32 or Step S37 executed after returning from Step S50, the CPU 4 obtains the identification slot number on the basis of the estimated distribution number. Moreover, the CPU 4 sets the optimal communication time TV or TH referring to the correlation. As a result, if the polarization-phase direction of the reader antenna 3 matches that of the tag antennas 151 of the relatively large number of the RFID tag circuit elements To, the CPU 4 makes the TV or TH relatively large so that the direction is maintained for a relatively long time. As describe above, the CPU 4 estimates the number of RFID tag circuit elements To according to a reception state and directly uses the estimated distribution number of the RFID tag circuit elements To. As a result, the optimization control of communication efficiency can be reliably executed.

In the above, the arrows shown in Fig. 3 and others show an example of a flow of signals and do not limit a flow direction of the signals.

Also, the flowcharts shown in Figs. 7, 8, 9 and others do not limit the present invention to the procedures shown in the flows. Addition or deletion of procedures or change of an order may be made to the flowcharts within a range not departing from the gist and technical idea of the present invention as defined by the claims.

Other than those described above, methods of the embodiments and each variation may be combined as appropriate for use.

Though not specifically exemplified, the present invention should be put into practice with various changes made in a range not departing from its gist.

## Claims

1. An apparatus (1) for communicating with radio frequency identification (RFID) tags, configured to execute information reading from a plurality of RFID tag circuit elements (To), each of said RFID tag circuit elements (To) including an IC circuit part (150) configured to store information and a tag antenna (151) for information transmission and reception, and having different polarization directions of said tag antenna (151), the apparatus comprising:
antenna means (3) configured to carry out information transmission and reception with said plurality of RFID tag circuit elements (To) via radio communication;
polarization switching means (S30, S35) capable of switching a polarization direction of said antenna means (3) during radio communication to a plurality of directions;
transmission control means (S115) configured to generate a reading command for acquiring information from a RFID tag circuit element (To) with a communication area (20) included in a peripheral area of said apparatus (1), and to transmit the reading command to said RFID tag circuit element (To) by said antenna means (3);
reception control means (S120, S135) capable of receiving a response signal in one of a plurality of identification slots selectively, said response signal being transmitted from said RFID tag circuit element (To) according to said reading command generated and transmitted by said transmission control means (S115);
**characterized in that** the apparatus (1) further comprises
slot number control means (S175, S180) configured to variably set the number of said identification slots on the basis of a reception state of the response signals received by said reception control means (S120, S13S);
distribution-related information obtainment means (S15, S20, S32, S37) configured to obtain, in said peripheral area, the number of RFID tag circuit elements (To), or said number of said identification slots corresponding to said number of said RFID tag circuit elements (To), associated with a polarization direction of said plurality of RFID tag circuit elements (To) as distribution-related information; and
switching setting means (S32, S37) configured to set a switching time interval for said plurality of polarization directions by the polarization switching means (S30, S35) on the basis of said distribution-related information obtained by said distribution-related information obtainment means (S15, S20, S32, S37).

2. The apparatus (1) according to claim 1, wherein:
said slot number control means (S 175, S180), as said reception state, adjusts the number of said identification slots on the basis of any one of the number of identification slots in which a collision of the response signals transmitted from said RFID tag circuit elements (To) occurs, the number of identification slots in which the collision of the response signals transmitted from said RFID tag circuit elements (To) does not occur and information can be obtained, and the number of blank identification slots in which no response signal transmitted from said RFID tag circuit element (To) is present, among the plurality of identification slots prepared by said reception control means (S120, S135) in order to receive said response signal from said RFID tag circuit element (To) according to said reading command.

3. The apparatus (1) according to claim 1 or 2, further comprising correlation storage means (5) configured to store correlation between the number of said identification slots and a required communication time corresponding to the number of the identification slots, wherein:
said switching setting means (S32, S37) sets said switching time interval referring to said correlation stored in said correlation storage means (5) on the basis of the number of said identification slots corresponding to said distribution-related information obtained by said distribution-related information obtainment means (S15, S20, S32, S37).

4. The apparatus (1) according to claim 3, wherein:
said slot number control means (S175, S180) increases and decreases the number of said identification slots on the basis of the reception state of the response signal by said reception control means (S120, S 135);
said distribution-related information obtainment means (S15, S20, S32, S37) obtains the number of said identification slots increased and decreased by said slot number control means (S 175, S180) as said distribution-related information; and
said switching setting means (S32, S37) sets said switching time interval referring to said correlation stored in said correlation storage means (5) to the number of said identification slots obtained by said distribution-related information obtainment means (S15, S20, S32, S37).

5. The apparatus (1) according to claim 3, further comprising tag number estimating means (S 180) configured to estimate a distribution number of said RFID tag circuit elements (To) to become communication targets in said communication area (20) on the basis of the reception state of a response signal by said reception control means (S120, S 135), wherein:
said distribution-related information obtainment means (S15, S20, S32, S37) obtains the distribution number of said RFID tag circuit elements (To) estimated by said tag number estimating means (S180) as said distribution-related information; and
said switching setting means (S32, S37) sets said switching time interval referring to said correlation stored in said correlation storage means (5) to the number of said identification slots corresponding to the distribution number of said RFID tag circuit elements (To) obtained by said distribution-related information obtainment means (S15, S20, S32, S37).

6. The apparatus (1) according to any one of claims I to 5, wherein:
said switching setting means (S32, S37) includes initial value setting means configured to set an initial value of said switching time interval on the basis of the distribution-related information known obtained by said distribution-related information obtainment means (S15, S20,S32,S37).

7. A method for communicating with radio frequency identification (RFID) tags by receiving a response signal from a plurality of RFID tag circuit elements (To) and executing information reading, said response signal being transmitted according to a reading command transmitted from a communication antenna, each of said RFID tag circuit elements (To) including an IC circuit part (150) storing information and a tag antenna (151) for information transmission and reception, and having a different polarization direction of said tag antenna (151) from each other, comprising the steps of:
a first step (S115) to generate a reading command for acquiring information from a RFID tag circuit element (To) with a communication area (20) included in a peripheral area, and to transmit the reading command to said RFID tag circuit element (To);
a second step (S120, S135) to receive a response signal in one of a plurality of identification slots selectively, said response signal being transmitted from said RFID tag circuit element (To) according to said reading command generated and transmitted in said first step (S 115); and
a third step (S 175, S 180) to variably set the number of said identification slots on the basis of a reception state of the response signals received in said second step (S120, S135);
a fourth step (S15, S20, S32, S37) to obtain, in said peripheral area, the number of RFID tag circuit elements (To), or said number of said identification slots corresponding to said number of said RFID tag circuit elements (To), associated with a polarization direction of said plurality of RFID tag circuit elements (To) as distribution-related information; and
a fifth step (S32, S37) to variably set a switching time interval for switching a polarization of said communication antenna to a plurality of polarization directions on the basis of said distribution-related information obtained.

8. The method according to claim 7, wherein:
said fourth step (S 15, S20, S32, S37) includes a step to obtain the number of identification slots for receiving a response signal selectively as said distribution-related information, said number being increased and decreased on the basis of a reception state of said response signal in the last communication; and
said fifth step (S32, S37) includes a step to set said switching time interval on the basis of the number of identification slots obtained in said fourth step (S15, S20, S32, S37).

9. The method according to claim 7, further comprising a sixth step (S 180) to estimate a distribution number of said RFID tag circuit elements (To) to become communication targets in said communication area (20) included in said peripheral area on the basis of the reception state of said response signal in the last communication, wherein:
said fourth step (S15, S20, S32, S37) includes a step to obtain said distribution number of said RFID tag circuit elements (To) estimated in said sixth step (S180) as said distribution-related information; and
said fifth step (S32, S37) includes a step to set said switching time interval on the basis of the number of said identification slots corresponding to said distribution number of said RFID tag circuit elements (To) obtained in said fourth step (S15, S20, S32, S37).

## Patentansprüche

1. Eine Vorrichtung (1) zum Kommunizieren mit Kennzeichnungen der Funkfrequenzidentifikation (RFID), die zum Ausführen des Lesens von Information aus einer Mehrzahl von RFID-Kennzeichnungsschaltkreiselementen (T₀) ausgestaltet ist, wobei jedes dieser RFID-Kennzeichnungsschaltkreiselemente (T₀) einen IC Schaltungsteil (150), der dazu ausgestaltet ist, Information zu speichern, und eine Kennzeichnungsantenne (151) zur Übertragung und zum Empfang von Information, umfasst und verschiedene Polarisationsrichtungen der Kennzeichnungsantenne (151) hat, wobei die Vorrichtung umfasst:
ein Antennenmittel (3), das zum Ausführen der Übertragung und des Empfangs von Information mit der Mehrzahl von RFID-Kennzeichnungsschaltkreiselementen (T₀) durch Funkverbindung ausgestaltet ist;
ein Polarisationsschaltungsmittel (S30, S35), das dazu in der Lage ist, eine Polarisationsrichtung des Antennenmittels (3) während der Funkverbindung in eine Mehrzahl von Richtungen zu schalten;
ein Übertragungssteuerungsmittel (S115), das zum Erzeugen eines Lesebefehls zur Beschaffung von Information aus einem RFID-Kennzeichnungsschaltkreiselement (T₀) mit einem Kommunikationsbereich (20), der in einem Peripheriebereich der Vorrichtung (1) enthalten ist, und zum Übertragen des Lesebefehls zu dem RFID-Kennzeichnungsschaltkreiselement (T₀) mittels des Antennenmittels (3) ausgestaltet ist;
ein Empfangssteuerungsmittel (S120, S135), das dazu in der Lage ist, ein Antwortsignal in einem ausgewählten aus einer Mehrzahl von Identifikationsaufnahmen zu empfangen, wobei das Antwortsignal, das durch das Kennzeichnungsschaltkreiselement (T₀) übertragen wird, dem Lesebefehl entsprechend, der durch das Übertragungssteuerungsmittel (S115) erzeugt und übertragen wird;
**dadurch gekennzeichnet, dass** die Vorrichtung (1) weiter umfasst:
ein Aufnahmenanzahlsteuerungsmittel (S175, S180), das ausgestaltet ist, die Anzahl der Identifikationsaufnahmen auf der Grundlage des Empfangszustands der Antwortsignale, die durch das Empfangssteuerungsmittel (S120, S135) empfangen werden, variabel einzustellen;
ein Mittel zur Erlangung von verteilungsbezogener Information (S15, S20, S32, S37), das ausgestaltet ist, in dem Peripheriebereich die Anzahl von Kennzeichnungsschaltkreiselementen (T₀) oder die Anzahl der Identifikationsaufnahmen entsprechend der Anzahl der Kennzeichnungsschaltkreiselementen (T₀) zu erlangen, die mit der Polarisationsrichtung der Mehrzahl von Kennzeichnungsschaltkreiselementen (T₀) als verteilungsbezogene Informationen verknüpft ist; und
ein Schaltungseinstellungsmittel (S32, S37), das ausgestaltet ist, ein Schaltungszeitintervall für die Mehrzahl von Polarisationsrichtungen durch das Polarisationsschaltungsmittel (S30, S35) auf der Grundlage der verteilungsbezogenen Information, die durch das Mittel zur Erlangung von verteilungsbezogener Information (S15, S20, S32, S37) erlangt wurde, einzustellen.

2. Die Vorrichtung (1) gemäß Anspruch 1, wobei:
das Aufnahmenanzahlsteuerungsmittel (S175, S180), wie der Empfangszustand, die Anzahl der Identifikationsaufnahmen auf der Grundlage einer von der Anzahl von Identifikationsaufnahmen, bei der eine Kollision der Antwortsignale, die von den Kennzeichnungsschaltkreiselementen (T₀) übertragen werden, erfolgt, der Anzahl von Identifikationsaufnahmen, bei der eine Kollision der Antwortsignale, die von den Kennzeichnungsschaltkreiselementen (T₀) gesendet werden, nicht erfolgt und Information erlangt werden kann, und der Anzahl freier Identifikationsaufnahmen, bei der kein Antwortsignal, das von den Kennzeichnungsschaltkreiselementen (T₀) übertragen wird, vorliegt, unter einer Mehrzahl von Identifikationsaufnahmen, die durch das Empfangssteuerungsmittel (S120, S135) bereitgestellt sind, um das Antwortsignal von den Kennzeichnungsschaltkreiselementen (T₀) entsprechend besagtem Lesebefehl zu empfangen, anpasst.

3. Die Vorrichtung (1) gemäß Anspruch 1 oder 2, umfasst weiter ein Korrelationsspeichermittel (5), das ausgestaltet ist, die Korrelation zwischen der Anzahl der Identifikationsaufnahmen und einer benötigten Verbindungszeit entsprechend der Anzahl der Identifikationsaufnahmen zu speichern, wobei:
das Schaltungseinstellungsmittel (S32, S37) das Schaltungszeitintervall mit Bezug auf die Korrelation, die in dem Korrelationsspeichermittel (5) gespeichert ist, auf der Grundlage der Anzahl der Identifikationsaufnahmen entsprechend der verteilungsbezogenen Information, die durch das Mittel zur Erlangung von verteilungsbezogener Information (S15, S20, S32, S37) erlangt wurde, einstellt.

4. Die Vorrichtung (1) gemäß Anspruch 3, wobei:
das Aufnahmenanzahlsteuerungsmittel (S175, S180) die Anzahl der Identifikationsaufnahmen auf der Grundlage des Empfangszustands des Antwortsignals durch das Empfangssteuerungsmittel (S120, S135) erhöht und verringert;
das Mittel zur Erlangung von verteilungsbezogener Information (S15, S20, S32, S37) die Anzahl der Identifikationsaufnahmen, die durch das Aufnahmenanzahlsteuerungsmittel (S175, S180) erhöht oder verringert wird, als die verteilungsbezogene Information erlangt; und
das Schaltungseinstellungsmittel (S32, S37) das Schaltungszeitintervall mit Bezug auf die Korrelation, die in dem Korrelationsspeichermittel (5) gespeichert ist, auf die Anzahl der Identifikationsaufnahmen, die durch das Mittel zur Erlangung von verteilungsbezogener Information (S15, S20, S32, S37) erhalten wird, einstellt.

5. Die Vorrichtung (1) gemäß Anspruch 3, umfasst weiter Kennzeichnungsanzahlschätzmittel (S180), das ausgestaltet ist, die Verteilungsanzahl der RFID-Kennzeichnungsschaltkreiselemente (T₀), die Verbindungsziele in dem Kommunikationsbereich (20) auf der Grundlage des Empfangszustands eines Antwortsignals mittels des Empfangssteuerungsmittel (S120, S135) werden sollen, zu schätzen, wobei:
das Mittel zur Erlangung von verteilungsbezogener Information (S15, S20, S32, S37) die Verteilungsanzahl der RFID-Kennzeichnungsschaltkreiselemente (T₀), die durch das Kennzeichnungsanzahlschätzmittel (S180) eingeschätzt wird, als verteilungsbezogene Information erhält; und
das Schaltungseinstellungsmittel (S32, S37) das Schaltungszeitintervall mit Bezug auf die Korrelation, die in dem Korrelationsspeichermittel (5) gespeichert ist, auf die Anzahl der Identifikationsaufnahmen entsprechend der Verteilungsanzahl der RFID-Kennzeichnungsschaltkreiselemente (T₀), die durch das Mittel zur Erlangung von verteilungsbezogener Information (S15, S20, S32, S37) erhalten wird, einstellt.

6. Die Vorrichtung (1) gemäß einem der Ansprüche 1 bis 5, wobei:
das Schaltungseinstellungsmittel (S32, S37) ein Anfangswerteinstellungsmittel umfasst, das ausgestaltet ist, einen Anfangswert des Schaltungszeitintervalls auf der Grundlage der bekannten verteilungsbezogenen Information, die durch das Mittel zur Erlangung von verteilungsbezogener Information (S15, S20, S32, S37) erhalten wird, einzustellen.

7. Ein Verfahren zum Kommunizieren mit Kennzeichnungen der Funkfrequenzidentifikation (RFID) durch das Empfangen eines Antwortsignals von einer Mehrzahl von RFID-Kennzeichnungsschaltkreiselementen (T₀) und das Ausführen der Auslesung von Information, wobei das Antwortsignal entsprechend eines Lesebefehls übertragen wird, der von einer Verbindungsantenne übertragen wird, wobei jedes der RFID-Kennzeichnungsschaltkreiselemente (T₀) ein IC Schaltungsteil (150), das Information speichert, und eine Kennzeichnungsantenne (151) zur Übertragung und zum Empfang von Information umfasst und voneinander verschiedene Polarisationsrichtungen der Kennzeichnungsantenne (151) hat, umfassend die Schritte:
einen ersten Schritt (S115) zum Erzeugen eines Lesebefehls zum Erlangen von Information von einem RFID-Kennzeichnungsschaltkreiselement (T₀) mit einem Kommunikationsbereich (20), der in einem Peripheriebereich enthalten ist, und zum Übertragen des Lesebefehls zu dem RFID-Kennzeichnungsschaltkreiselement (T₀);
einem zweiten Schritt (S120, S135) zum Empfangen eines Antwortsignals von einem ausgewählten aus einer Mehrzahl von Identifikationsaufnahmen, wobei das Antwortsignal durch das RFID-Kennzeichnungsschaltkreiselement (T₀) übertragen wird, entsprechend dem Lesebefehl, der im ersten Schritt (S115) erzeugt und übertragen wird,; und
einen dritten Schritt (S175, S180) zum variablen Einstellen der Anzahl der Identifikationsaufnahmen auf der Grundlage eines Empfangszustands des Antwortsignals, das in dem zweiten Schritt (S120, S135) empfangen wurde;
einem vierten Schritt (S15, S20, S32, S37) zum Erhalten der Anzahl der RFID-Kennzeichnungsschaltkreiselemente (T₀) oder der Anzahl der Identifikationsaufnahmen, die der Anzahl der RFID-Kennzeichnungsschaltkreiselemente (T₀) entspricht, die mit der Polarisationsrichtung der Mehrzahl von RFID-Kennzeichnungsschaltkreiselementen (T₀) als verteilungsbezogene Informationen verknüpft ist, in dem Kommunikationsbereich; und
einem fünften Schritt (S32, S37) zum variablen Einstellen eines Schaltungszeitintervall zum Schalten einer Polarisation der Verbindungsantenne in eine Mehrzahl aus Polarisationsrichtungen auf der Grundlage der erhaltenen, verteilungsbezogenen Information.

8. Das Verfahren gemäß Anspruch 7, wobei:
der vierte Schritt (S15, S20, S32, S37) einen Schritt umfasst, zum Erhalten der Anzahl von Identifikationsaufnahmen zum ausgewählten Empfangen eines Antwortsignals als verteilungsbezogene Information, wobei die Anzahl auf der Grundlage des Empfangszustands des Antwortsignals der letzten Verbindung erhöht oder verringert wird; und
der fünfte Schritt (S32, S37) einen Schritt zum Einstellen des Schaltungszeitintervalls auf der Grundlage der in dem vierten Schritt (S15, S20, S32, S37) erhaltenen Anzahl von Identifikationsaufnahmen umfasst.

9. Das Verfahren gemäß Anspruch 7 weiter umfassend einen sechsten Schritt (S180) zum Schätzen der Verteilungsanzahl der RFID-Kennzeichnungsschaltkreiselemente (T₀), um Verbindungsziele in dem Kommunikationsbereich (20) zu werden, der in dem Peripheriebereich enthalten ist, auf der Grundlage des Empfangszustands des Antwortsignals der letzten Verbindung, wobei:
der vierte Schritt (S15, S20, S32, S37) einen Schritt zum Erhalten der Verteilungsanzahl der RFID-Kennzeichnungsschaltkreiselemente (T₀), die in Schritt sechs (S180) als verteilungsbezogene Information geschätzt wurde, umfasst; und
der fünfte Schritt (S32, S37) einen Schritt zum Einstellen des Schaltungszeitintervalls auf der Grundlage der Anzahl der Identifikationsaufnahmen entsprechend der Verteilungsanzahl der RFID-Kennzeichnungsschaltkreiselemente (T₀), die in dem vierten Schritt (S15, S20, S32, S37) erhalten wurde,
umfasst.

## Revendications

1. Appareil (1) de communication avec des étiquettes d'identification par radiofréquence (RFID), configuré pour exécuter une lecture d'informations à partir d'une pluralité d'éléments (To) de circuit d'étiquette RFID, chacun desdits éléments (To) de circuit d'étiquette RFID comportant une partie (150) de circuit IC configurée pour stocker des informations et une antenne d'étiquette (151) pour la transmission et la réception d'informations, et ayant des directions de polarisation différentes de ladite antenne d'étiquette (151), l'appareil comprenant :
un moyen d'antenne (3) configuré pour réaliser par radiocommunication la réception et la transmission d'informations avec ladite pluralité d'éléments (To) de circuit d'étiquette RFID ;
un moyen (S30, S35) de commutation de polarisation capable de commuter une direction de polarisation dudit moyen d'antenne (3) durant la radiocommunication dans plusieurs directions ;
un moyen (S115) de commande de transmission configuré pour générer une commande de lecture pour acquérir des informations à partir d'un élément (To) de circuit d'étiquette RFID avec une zone de communication (20) incluse dans une zone périphérique dudit appareil (1), et pour transmettre la commande de lecture audit élément (To) de circuit d'étiquette RFID par ledit moyen d'antenne (3);
un moyen (S120, S135) de commande de réception capable de recevoir un signal de réponse dans l'un d'une pluralité de créneaux temporels d'identification de manière sélective, ledit signal de réponse étant transmis à partir dudit élément (To) de circuit d'étiquette RFID selon ladite commande de lecture générée et transmise par ledit moyen (S115) de commande de transmission ;
**caractérisé en ce que** l'appareil (1) comprend en outre
un moyen (S175, S180) de commande de nombre de créneaux temporels configuré pour régler de manière variable le nombre desdits créneaux temporels d'identification sur la base d'un état de réception des signaux de réponse reçus par ledit moyen (S120, S135) de commande de réception;
un moyen (S15, S20, S32, S37) d'obtention d'informations relatives à la distribution configuré pour obtenir, dans ladite zone périphérique, le nombre d'éléments (To) de circuit d'étiquette RFID, ou ledit nombre desdits créneaux temporels d'identification correspondant audit nombre desdits éléments (To) de circuit d'étiquette RFID, associé à une direction de polarisation de ladite pluralité d'éléments (To) de circuit d'étiquette RFID au titre des informations relatives à la distribution ; et
un moyen (S32, S37) de réglage de commutation configuré pour régler un intervalle de temps de commutation pour ladite pluralité de directions de polarisation par le moyen (S30, S35) de commutation de polarisation sur la base desdites informations relatives à la distribution obtenues par ledit moyen (S15, S20, S32, S37) d'obtention d'informations relatives à la distribution.

2. Appareil (1) selon la revendication 1, dans lequel:
ledit moyen (S175, S180) de commande de nombre de créneaux temporels, au titre dudit état de réception, règle le nombre desdits créneaux temporels d'identification sur la base de l'un quelconque du nombre de créneaux temporels d'identification où une collision des signaux de réponse transmis depuis lesdits éléments (To) de circuit d'étiquette RFID se produit, le nombre de créneaux temporels d'identification où la collision des signaux de réponse transmis à partir desdits éléments (To) de circuit d'étiquette RFID ne se produit pas et les informations peuvent être obtenues, et le nombre de créneaux temporels d'identification blancs où aucun signal de réponse transmis à partir dudit élément (To) de circuit d'étiquette RFID n'est présent, parmi la pluralité de créneaux temporels d'identification préparés par ledit moyen (S120, S135) de commande de réception afin de recevoir ledit signal de réponse à partir dudit élément (To) de circuit d'étiquette RFID en fonction de ladite commande de lecture.

3. Appareil (1) selon la revendication 1 ou 2, comprenant en outre un moyen (5) de stockage de corrélation configuré pour stocker une corrélation entre le nombre desdits créneaux temporels d'identification et un temps de communication nécessaire correspondant au nombre des créneaux temporels d'identification, où :
ledit moyen (S32, S37) de réglage de commutation règle ledit intervalle de temps de commutation en se référant à ladite corrélation stockée dans ledit moyen (5) de stockage de corrélation sur la base du nombre desdits créneaux temporels d'identification correspondant auxdites informations relatives à la distribution obtenues par ledit moyen (S15, S20, S32, S37) d'obtention d'informations relatives à la distribution.

4. Appareil (1) selon la revendication 3, dans lequel:
ledit moyen (S175, S180) de commande de nombre de créneaux temporels augmente et diminue le nombre desdits créneaux temporels d'identification sur la base de l'état de réception du signal de réponse par ledit moyen (S120, S135) de commande de réception ;
ledit moyen (S15, S20, S32, S37) d'obtention d'informations relatives à la distribution obtient le nombre desdits créneaux temporels d'identification augmenté et diminué par ledit moyen (S175, S180) de commande de nombre de créneaux temporels au titre desdites informations relatives à la distribution ; et
ledit moyen (S32, S37) de réglage de commutation règle ledit intervalle de temps de commutation en se référant à ladite corrélation stockée dans ledit moyen (5) de stockage de corrélation au nombre desdits créneaux temporels d'identification obtenu par ledit moyen (S15, S20, S32, S37) d'obtention d'informations relatives à la distribution.

5. Appareil (1) selon la revendication 3, comprenant en outre un moyen (S180) d'estimation de nombre d'étiquette configuré pour estimer un nombre de distribution desdits éléments (To) de circuit d'étiquette RFID pour devenir des cibles de communication dans ladite zone de communication (20) sur la base de l'état de réception d'un signal de réponse par ledit moyen (S120, S135) de commande de réception, où :
ledit moyen (S15, S20, S32, S37) d'obtention d'informations relatives à la distribution obtient le nombre de distribution desdits éléments (To) de circuit d'étiquette RFID estimé par ledit moyen (S180) d'estimation de nombre d'étiquette au titre desdites informations relatives à la distribution ; et
ledit moyen (S32, S37) de réglage de commutation règle ledit intervalle de temps de commutation en se référant à ladite corrélation stockée dans ledit moyen (5) de stockage de corrélation au nombre desdits créneaux temporels d'identification correspondant au nombre de distribution desdits éléments (To) de circuit d'étiquette RFID obtenu par ledit moyen (S15, S20, S32, S37) d'obtention d'informations relatives à la distribution.

6. Appareil (1) selon l'une quelconque des revendications 1 à 5, dans lequel :
ledit moyen (S32, S37) de réglage de commutation comporte un moyen de réglage de valeur initiale configuré pour régler une valeur initiale dudit intervalle de temps de commutation sur la base des informations relatives à la distribution obtenues par ledit moyen (S15, S20, S32, S37) d'obtention d'informations relatives à la distribution.

7. Procédé de communication avec des étiquettes d'identification par radio fréquence (RFID) en recevant un signal de réponse provenant d'une pluralité d'éléments (To) de circuit d'étiquette RFID et en exécutant la lecture d'informations, ledit signal de réponse étant transmis selon une commande de lecture transmise par une antenne de communication, chacun desdits éléments (To) de circuit d'étiquette RFID comportant une partie de circuit IC (150) stockant des informations et une antenne d'étiquette (151) pour la transmission et la réception des informations, et ayant une direction de polarisation de ladite antenne d'étiquette (151) différente les uns des autres, comprenant les étapes suivantes :
une première étape (S115) pour générer une commande de lecture permettant d'acquérir des informations à partir d'un élément (To) de circuit d'étiquette RFID avec une zone de communication (20) incluse dans une zone périphérique, et pour transmettre la commande de lecture audit élément (To) de circuit d'étiquette RFID ;
une deuxième étape (S120, S135) pour recevoir un signal de réponse dans l'un d'une pluralité de créneaux temporels d'identification de manière sélective, ledit signal de réponse étant transmis à partir dudit élément (To) de circuit d'étiquette RFID en fonction de ladite commande de lecture générée et transmise dans ladite première étape (S115) ; et
une troisième étape (S175, S180) pour régler de manière variable le nombre desdits créneaux temporels d'identification sur la base d'un état de réception des signaux de réponse reçus dans ladite deuxième étape (S120, S135);
une quatrième étape (S15, S20, S32, S37) pour obtenir, dans ladite zone périphérique, le nombre d'éléments (To) de circuit d'étiquette RFID, ou ledit nombre desdits créneaux temporels d'identification correspondant audit nombre desdits éléments (To) de circuit d'étiquette RFID, associé à une direction de polarisation de ladite pluralité d'éléments (To) de circuit d'étiquette RFID comme étant les informations relatives à la distribution ; et
une cinquième étape (S32, S37) pour régler de manière variable un intervalle de temps de commutation pour commuter une polarisation de ladite antenne de communication à une pluralité de directions de polarisation sur la base desdites informations relatives à la distribution obtenues.

8. Procédé selon la revendication 7, dans lequel:
ladite quatrième étape (S15, S20, S32, S37) comporte une étape pour obtenir le nombre de créneaux temporels d'identification permettant de recevoir un signal de réponse de manière sélective au titre desdites informations relatives à la distribution, ledit nombre étant augmenté et diminué sur la base d'un état de réception dudit signal de réponse dans la dernière communication ; et
ladite cinquième étape (S32, S37) comporte une étape pour régler ledit intervalle de temps de commutation sur la base du nombre de créneaux temporels d'identification obtenu dans ladite quatrième étape (S15, S20, S32, S37).

9. Procédé selon la revendication 7, comprenant en outre une sixième étape (S180) pour estimer un nombre de distribution desdits éléments (To) de circuit d'étiquette RFID pour devenir des cibles de communication dans ladite zone de communication (20) incluse dans ladite zone périphérique, sur la base de l'état de réception dudit signal de réponse dans la communication précédente, où :
ladite quatrième étape (S15, S20, S32, S37) comporte une étape pour obtenir ledit nombre de distribution desdits éléments (To) de circuit d'étiquette RFID estimé dans ladite sixième étape (S180) au titre desdites informations relatives à la distribution ; et
ladite cinquième étape (S32, S37) comporte une étape pour régler ledit intervalle de temps de commutation sur la base du nombre desdits créneaux temporels d'identification correspondant audit nombre de distribution desdits éléments (To) de circuit d'étiquette RFID obtenu dans ladite quatrième étape (S15, S20, S32, S37).
